# EUROPÄISCHE PATENTSCHRIFT

(11) **EP 3 650 968 B1**
(45) Veröffentlichungstag und Bekanntmachung des Hinweises auf die Patenterteilung: **25.06.2025**
(21) Anmeldenummer: 18204946.0
(22) Anmeldetag: 07.11.2018
(51) Int. Cl.: G05B 19/408, G05B 19/05, G06F 9/445, G06F 21/51, G06F 21/53

(54) **VERFAHREN ZUM BETRIEB EINER PRODUKTIONS- ODER WERKZEUGMASCHINE UND PRODUKTIONS- ODER WERKZEUGMASCHINE SOWIE COMPUTERPROGRAMM ZUM BETRIEB EINER PRODUKTIONS- ODER WERKZEUGMASCHINE**
PRODUCTION OR MACHINE TOOL AND METHOD FOR OPERATING A PRODUCTION OR MACHINE TOOL AND COMPUTER PROGRAM FOR OPERATING A PRODUCTION OR MACHINE TOOL
PROCÉDÉ DE FONCTIONNEMENT D'UNE MACHINE DE PRODUCTION OU MACHINE-OUTIL ET MACHINE DE PRODUCTION OU MACHINE-OUTIL AINSI QUE PROGRAMME INFORMATIQUE DESTINÉ AU FONCTIONNEMENT D'UNE MACHINE DE PRODUCTION OU MACHINE-OUTIL

(43) Veröffentlichungstag der Anmeldung: 13.05.2020
(73) Patentinhaber: Siemens Aktiengesellschaft, 80333 München (DE)
(72) Erfinder: Männer, Andres, 09236 Claußnitz OT Diethensdorf (DE)
(74) Vertreter: Siemens Patent Attorneys

(56) Entgegenhaltungen:
- EP-A1- 3 376 392
- US-A1- 2017 060 574

## Beschreibung

Die Erfindung betrifft ein Verfahren zum Betrieb einer Produktions- oder Werkzeugmaschine, insbesondere ein Verfahren zum Laden zusätzlicher Funktionen auf eine Produktions- oder Werkzeugmaschine. Im Weiteren betrifft die Erfindung auch eine zur Ausführung des Verfahrens bestimmte und eingerichtete Produktions- oder Werkzeugmaschine.

Solche Maschinen (Produktions- oder Werkzeugmaschinen) sind an sich bekannt und umfassen im Falle einer Werkzeugmaschine zum Beispiel einen oder mehrere Antriebe (Vorschubantriebe) zur Positionierung eines Werkzeugs. Solche Maschinen sind jeweils ein komplexer Zusammenschluss verschiedener logischer und physischer Komponenten (Antriebe, Achsen etc.) mit diversitärer Multiplizität.

Im Rahmen von Industry 4.0 und dem sogenannten Internet der Dinge (Internet of Things; IoT) besteht eine Möglichkeit, eine spezifische Funktion einer solchen Maschine mittels sogenannter Apps um weitere Funktionen oder Mikroservices zu erweitern. Solche Apps stehen beispielsweise in der sogenannten Cloud zum Herunterladen zur Verfügung und werden dafür dort von einer Cloud-Plattform (AppStore) bereitgestellt. Das Herunterladen einer App von einer Cloud-Plattform und die Installation der heruntergeladenen App auf einem Zielsystem (Hostsystem), hier einer Produktions- oder Werkzeugmaschine, wird als Deployment bezeichnet.

Das Herunterladen einer App aus der Cloud, auch einer App mit einer in einem Container gekapselten Funktionalität, ist für sich genommen bekannt, zum Beispiel aus der US 2017/060574 A1.

Aus der EP 3 376 392 A1 ist ein Verfahren zum Betrieb eines Automatisierungssystems bekannt, bei dem auf das Automatisierungssystem eine App geladen ist, wobei zur Ausführung der App notwendige Funktionen nachgeladen werden.

Eine App kann in einem AppStore für generische Maschinen angeboten werden. Dabei sind ein jeweiliger spezieller Aufbau eines späteren Hostsystems und eine Laufzeitumgebung des Hostsystems nicht bekannt und diese Kenntnis ist auch nicht erforderlich. Zu diesem Zwecke umfasst die App zumindest einen bei der sogenannten Containervirtualisierung verwendeten virtuellen Container (im Folgenden kurz als Container bezeichnet) und in den oder jeden von der App umfassten Container ist eine zu der App gehörige Softwarefunktionalität eingebettet. Der oder jeder Container umfasst zumindest eine zur Ausführung der jeweils eingebetteten Softwarefunktionalität notwendige Laufzeitumgebung (Runtime Environment). Die von dem Container umfasste Laufzeitumgebung ermöglicht die Ausführung der jeweiligen Softwarefunktionalität unabhängig vom Hostsystem und dessen Laufzeitumgebung. Eine auf ein Hostsystem geladene App wird auf dem Hostsystem durch das Starten des oder jedes davon umfassten Containers gestartet und ist auf den oder jeden von der App umfassten virtuellen Container begrenzt. Solche Container sind an sich bekannt und insoweit kann zum Beispiel auf die unter der Bezeichnung "Docker" bekannte Software zur sogenannten Containervirtualisierung verwiesen werden. Ein anderes Bespiel ist "LXC" (Linux Containers).

Zum Datenaustausch zwischen einer heruntergeladenen App und dem Hostsystem, also der jeweiligen Produktions- oder Werkzeugmaschine, oder auch zum Datenaustausch zwischen heruntergeladenen Apps mit unterschiedlichen virtuellen Containern umfasst jeder Container als Bestandteil einer Container-Konfiguration eine Schnittstellenkonfiguration. Diese umfasst eine Definition realer und/oder virtueller Netzwerkschnittstellen, definiert den Umfang einer Zugriffsberechtigung auf Ressourcen und Dienste des Betriebssystems des Hostsystems und/oder definiert Einschränkungen für den Zugriff auf die vorgenannten Netzwerkschnittstellen, Ressourcen oder Dienste.

Die Schnittstellenkonfiguration bezieht sich nicht nur auf vorhandene Objekte. Nicht vorhandene Objekte, zum Beispiel virtuelle Netzwerkschnittstellen, können beim Start einer App auch dynamisch erzeugt werden. Die Schnittstellenkonfiguration umfasst dann die Daten für das bisher nicht vorhandene Objekt, zum Beispiel eine virtuelle Netzwerkschnittstelle und diese wird nach diesen Daten angelegt.

Speziell im Rahmen des Internet der Dinge sowie Industry 4.0 ist es besonders relevant, dass Apps sich untereinander weder gewollt noch ungewollt gegenseitig beeinflussen, da dies zu Produktionsausfällen führen kann. Mit herkömmlichen Containerisierungsmethoden ist dies nicht ausreichend gewährleistet.

Eine Aufgabe der vorliegenden Erfindung besteht entsprechend darin, ein Verfahren zum Betrieb einer Maschine (Produktions- oder Werkzeugmaschine) der eingangs genannten Art anzugeben, bei dem eine solche gegenseitige Beeinflussbarkeit sicher vermieden werden kann.

Erfindungsgemäß wird diese Aufgabe mittels eines Verfahrens zum Betrieb einer Maschine der eingangs genannten Art (Produktions- oder Werkzeugmaschine) mit den Merkmalen des Anspruchs 1 gelöst. Das Verfahren umfasst die folgenden Schritte: Herunterladen einer App in den Speicher der Maschine; Verhindern des unmittelbaren Starts der heruntergeladenen App; Modifizieren einer Konfiguration der heruntergeladenen App (AppKonfiguration); Starten der heruntergeladenen App nach dem Modifizieren der AppKonfiguration.

In einem ersten Schritt des Verfahrens wird zunächst eine App, mit welcher die Funktion der jeweiligen Maschine ergänzt oder erweitert werden soll, aus einem entfernten Speicher in einen Speicher der Maschine geladen. Der entfernte Speicher ist zum Beispiel ein zu einer Cloud-Plattform gehörender Speicher, zum Beispiel ein dort zum Herunterladen von Apps eingerichteter Speicher (AppStore). Eine App umfasst in grundsätzlich an sich bekannter Art und Weise zumindest einen virtuellen Container mit einer darin gekapselten Softwarefunktionalität, welche die Funktion der App bestimmt. Eine App umfasst des Weiteren Konfigurationsdaten, welche im Folgenden unter der Bezeichnung AppKonfiguration zusammengefasst werden.

In einem zweiten Schritt des Verfahrens wird der unmittelbare Start der heruntergeladenen App auf der Maschine verhindert. Dies ist aufgrund des eingangs skizzierten Risikos, dass sich heruntergeladene Apps gegenseitig beeinflussen können, notwendig. Eine App, deren Start verhindert wird, kann keine anderen Apps beeinflussen.

In einem dritten Schritt des Verfahrens erfolgt eine automatische Modifikation der AppKonfiguration. Dabei werden von der AppKonfiguration umfasste Zuweisungen ausgewertet. Eine Zuweisung hat zum Beispiel das Format: "Gerät1: GerätA". Ein innerhalb der heruntergeladenen App verwendeter Name (hier: "Gerät1") wird damit auf einen anderen Namen (hier: "GerätA") abgebildet. Dies gilt allgemein für beliebige Geräte, Ressourcen und dergleichen, also zum Beispiel auch für (virtuelle oder reale) Netzwerke. Diese Abbildung erlaubt die Verwendung eines Namens für ein Gerät, eine Ressource oder dergleichen innerhalb der App oder des Containers, obwohl der Name des Geräts, der Ressource etc. auf einem späteren Hostsystem noch nicht bekannt ist. Eine Zuweisung hat - grundsätzlich wie eine Gleichung - einen linken und einen rechten Teil. Der rechte Teil der Zuweisung oder allgemein derjenige Teil der Zuweisung, der nicht in der App oder dem Container verwendet wird, wird hier und im Folgenden Bezeichner genannt. Bei der automatischen Modifikation der AppKonfiguration werden die von der AppKonfiguration umfassten Bezeichner ausgewertet. Bei der Auswertung wird der oder jeder Bezeichner mit von einer Positivliste und/oder einer Negativliste umfassten Bezeichnern verglichen. Als automatische Modifikation der AppKonfiguration wird ein weder in der Positivliste noch in der Negativliste enthaltener Bezeichner durch einen automatisch ausgewählten oder automatisch generierten eindeutigen und einzigartigen Zielausdruck ersetzt. Wenn im oben genannten Beispiel der Bezeichner "GerätA" weder in der Positiv- noch in der Negativliste enthalten ist, wird dieser durch einen automatisch generierten Zielausdruck, zum Beispiel "ABCD1234", ersetzt. Eine dynamisch erzeugte Ressource wird dann diesem Namen zugewiesen. Damit wird sichergestellt, dass Ressourcen (zum Beispiel Schnittstellen) von Apps zur Laufzeit eindeutig sind und nicht durch andere Apps verwendet werden können.

Nach der automatischen Modifikation der AppKonfiguration wird die heruntergeladene App automatisch gestartet. Konflikte mit anderen Apps, also zum Beispiel einer App, welche ebenfalls die Ressource "GerätA" verwendet, sind jetzt ausgeschlossen.

Durch die beschriebene automatische Modifikation der AppKonfiguration wird der Namensraum der heruntergeladenen App verändert. Der Namensraum umfasst Benennungen eines (virtuellen oder realen) Netzwerks, welches die App verwendet. Der Namensraum umfasst aber auch Benennungen von weiteren Geräten, Ressourcen und dergleichen, welche die App verwendet. Unmittelbar nach dem Herunterladen einer App kann deren Namensraum unerwünschte Überschneidungen mit dem Namensraum einer anderen App haben, zum Beispiel weil beide Apps aufgrund gleicher Bezeichner auf dieselben Netzwerke, Geräte, Ressourcen usw. zugreifen. Der zentrale Vorteil der hier vorgeschlagenen Neuerung besteht darin, dass die automatische Modifikation einen angepassten Namensraum für die neu heruntergeladene App herstellt, der solche unerwünschten Überschneidungen vermeidet.

Die hier vorgeschlagene Neuerung kommt für Werkzeugmaschinen und allgemein für achsbasierte Maschinen in Betracht. Als Werkzeugmaschine werden bekanntlich alle Maschinen bezeichnet, die unter anderem im Maschinenbau und im Werkzeugbau zur Bearbeitung von Bauteilen (Werkstücken) mit Werkzeugen dienen und zur Bewegung des jeweiligen Werkzeugs eine Mehrzahl von Maschinenachsen aufweisen. Zu den Werkzeugmaschinen gehören auch sogenannte NC- oder CNC-Maschinen. Ein Industrieroboter ist bekanntlich eine universelle, programmierbare Maschine mit einer Mehrzahl von Maschinenachsen, die neben einer Bearbeitung von Bauteilen alternativ auch zur Handhabung von Werkstücken und für Montagezwecke bestimmt und eingerichtet ist. Ein Industrieroboter ist ein Beispiel für eine hier als Produktionsmaschine bezeichnete allgemeine Bearbeitungsmaschine. Eine Werkzeugmaschine ist ein Beispiel für eine spezielle Bearbeitungsmaschine. Zwecks Erfassung aller Möglichkeiten von achsbasierten Maschinen, die zum Be- oder Verarbeiten von Bauteilen, deren Handhabung und Transport oder zum Beispiel zur maßgenauen Platzierung in Relation zu zumindest einem weiteren Bauteil bestimmt und eingerichtet sind, wird hier und im Folgenden von Produktions- oder Werkzeugmaschinen und mitunter kurz von Maschinen gesprochen.

Bei einer Ausführungsform des Verfahrens wird ein entweder in der Positivliste oder in der Negativliste enthaltener Bezeichner durch einen dem Bezeichner zugeordneten Zielausdruck ersetzt. Der zugeordnete Zielausdruck ist entweder direkt in der Positiv- bzw. der Negativliste oder in einer Umsetzungstabelle kodiert. Durch die Ersetzung von in der AppKonfiguration verwendeten und in der Positivliste enthaltenen Bezeichnern wird die Verwendbarkeit von Ressourcen und Geräten durch die heruntergeladene App auf spezielle Geräte und Ressourcen beschränkt, nämlich auf solche Geräte und Ressourcen, die in der Positivliste oder der Umsetzungstabelle als Zielausdrücke angelegt sind.

Bei einer vorteilhaften Ausführungsform des Verfahrens erfolgen das Verhindern des unmittelbaren Starts einer App, das Modifizieren der AppKonfiguration und das anschließende Starten der App mittels ein und derselben Softwarefunktionalität, nämlich einer Softwarefunktionalität, die im Folgenden Verwaltungseinheit genannt wird. Die Verwaltungseinheit ist ein Computerprogramm, ein Computerprogrammmodul, ggf. auch ein verteiltes Computerprogramm oder Computerprogrammmodul, das in den Speicher der Produktions- oder Werkzeugmaschine geladen ist und bei der Ausführung des Verfahrens durch eine Verarbeitungseinheit der Produktions- oder Werkzeugmaschine ausgeführt wird. Die hat den Vorteil einer Konzentration der zentralen Schritte des hier vorgeschlagenen Ansatzes auf genau eine Einheit, nämlich die Verwaltungseinheit, die dann zum Beispiel auch als Laufzeitumgebung für die oder jede heruntergeladene App fungieren kann.

Bei einer speziellen Ausführungsform des Verfahrens fungiert die Verwaltungseinheit als Schnittstelle zwischen der heruntergeladenen App und der Produktions- oder Werkzeugmaschine, indem die Verwaltungseinheit definierte Schnittstellen für die heruntergeladene App zur Verfügung stellt. Dann fungiert die Verwaltungseinheit als Sicherheitsschicht zu der Maschine, auf welche die App heruntergeladen wurde und gewährleistet mittels der definierten Schnittstellen nur einen Zugriff auf unkritische Geräte und Ressourcen der Maschine und/oder nur einen Zugriff in einem unkritischen Umfang, wobei unkritisch dabei jeweils meint, dass die Funktion der Maschine nicht in Frage gestellt ist.

Die Erfindung ist auch eine zur Ausführung des hier vorgeschlagenen Verfahrens eingerichtete Produktions- oder Werkzeugmaschine nach Anspruch 5. Diese umfasst einen Speicher für von einem entfernten Speicher herunterladbare Apps und in den Speicher ist ein zur Ausführung des Verfahrens bestimmtes Computerprogramm (Computerprogramm oder Computerprogrammmodul, ggf. in verteilter Form), nämlich die Verwaltungseinheit, geladen.

Die hier vorgeschlagene Produktions- oder Werkzeugmaschine kann alternativ auch dadurch definiert werden, dass diese einen Speicher für von einem entfernten Speicher herunterladbare Apps und eine in den Speicher geladene, in Software implementierte Verwaltungseinheit umfasst, wobei die Verwaltungseinheit dafür bestimmt und eingerichtet ist, automatisch zumindest die folgenden Verfahrensschritte auszuführen: Verhindern eines unmittelbaren Starts einer heruntergeladenen App auf der Produktions- oder Werkzeugmaschine, Modifizieren einer AppKonfiguration einer heruntergeladenen App und Starten einer heruntergeladenen App nach dem Modifizieren der AppKonfiguration. Die Verwaltungseinheit modifiziert eine AppKonfiguration einer heruntergeladenen App, indem von der AppKonfiguration umfasste Bezeichner ausgewertet und mit von einer Positivliste und/oder einer Negativliste umfassten Bezeichnern verglichen werden und ein weder in der Positivliste noch in der Negativliste enthaltener Bezeichner durch einen automatisch ausgewählten oder automatisch generierten Zielausdruck ersetzt wird.

Bei einer Ausführungsform der Produktions- oder Werkzeugmaschine fungiert die Verwaltungseinheit als Schnittstelle (Softwareschnittstelle) zwischen der heruntergeladenen App und der Produktions- oder Werkzeugmaschine, indem die Verwaltungseinheit definierte Schnittstellen für die heruntergeladene App zur Verfügung stellt.

Bei einer weiteren Ausführungsform der Produktions- oder Werkzeugmaschine umfasst diese ein sogenanntes Edge Device und das Herunterladen von Apps erfolgt in einen Speicher des Edge Device und die Verwaltungseinheit wird auf dem Edge Device ausgeführt, so dass die Apps und die Verwaltungseinheit in einer separaten Einheit konzentriert sind.

Als auf eine Produktions- oder Werkzeugmaschine herunterladbare Apps kommen bevorzugt solche Apps in Betracht, die bei einer Ausführung auf der Produktions- oder Werkzeugmaschine als IoT-Erweiterungen der Produktions- oder Werkzeugmaschine fungieren. Insofern ist die hier vorgeschlagene Neuerung auch die Verwendung eines Verfahrens wie hier und im Folgenden beschrieben zur Installation von IoT-Erweiterungen auf einer Produktions- oder Werkzeugmaschine.

Das Verfahren ist in Software implementiert. Insoweit ist die hier vorgeschlagene Neuerung auch ein Computerprogramm mit Programmcodemitteln, also ein Computerprogrammbefehle umfassendes Computerprogramm, wobei die Programmcodemittel bzw. Computerprogrammbefehle bei einer Ausführung des Computerprogramms durch eine oder auf einer Produktions- oder Werkzeugmaschine diese veranlassen, die Schritte des hier und im Folgenden beschriebenen Verfahrens auszuführen.

Damit ist die hier vorgeschlagene Neuerung schließlich auch ein computerlesbares Speichermedium mit elektronisch auslesbaren Steuersignalen, die bei der Ausführung durch eine Produktions- oder Werkzeugmaschine diese veranlassen, die Schritte des Verfahrens nach einem der vorangehenden Verfahrensansprüche auszuführen, also ein computerlesbares Speichermedium oder allgemein ein Computerprogrammprodukt, auf dem ein als Mittel zur Ausführung des hier und im Folgenden beschriebenen Verfahrens fungierendes Computerprogramm, insbesondere ein in dem Verfahren als Verwaltungseinheit fungierendes Computerprogramm, gespeichert ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: eine Produktions- oder Werkzeugmaschine mit aus einem AppStore in einen Speicher der Produktions- oder Werkzeugmaschine heruntergeladenen Apps,
- FIG 2: Einzelheiten einer aus einem AppStore herunterladbaren App,
- FIG 3: Beispiele für eine Konfiguration (AppKonfiguration) einer aus einem AppStore herunterladbaren App,
- FIG 4: Einzelheiten einer Plattform zur Aufnahme geladener Apps und einer Verwaltungseinheit zur Ausführung des hier vorgeschlagenen Ansatzes,
- FIG 5: und
- FIG 6: Beispiele für eine AppKonfiguration und eine nach dem hier vorgeschlagenen Ansatz resultierende (modifizierte) AppKonfiguration.

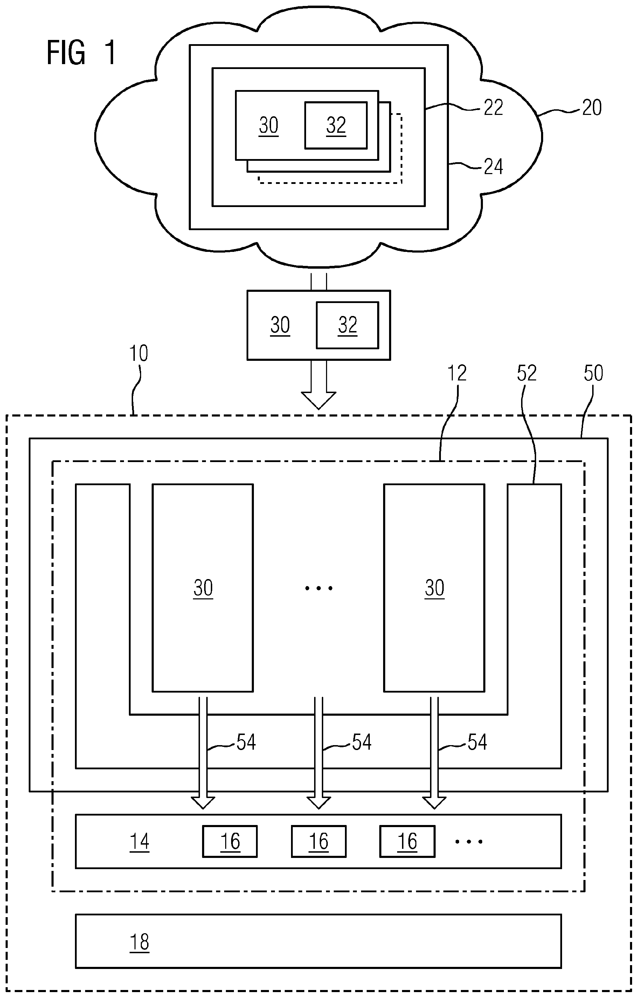

Die Darstellung in FIG 1 zeigt in schematisch stark vereinfachter Form eine im Folgenden oftmals kurz nur als Maschine 10 bezeichnete Produktions- oder Werkzeugmaschine 10 der eingangs genannten Art. Mechanische Einzelheiten der Maschine 10, also zum Beispiel Achsen oder dergleichen, sind nicht gezeigt. Die Darstellung ist vielmehr im Wesentlich auf eine Darstellung eines von der Maschine 10 umfassten Speichers 12, nämlich eines Speichers 12 zum Speichern von Daten, beschränkt.

In den Speicher 12 ist in grundsätzlich an sich bekannter Art und Weise eine sogenannte Laufzeitumgebung 14 (Runtime Environment oder kurz Runtime) der Maschine 10 geladen. Diese bestimmt die Grundfunktionalität der Maschine 10 und hängt von deren Konfiguration ab. Bei einer Maschine 10 in Form einer Werkzeugmaschine mit genau zwei Vorschubachsen umfasst die Laufzeitumgebung 14 zum Beispiel zumindest in Software implementierte Module oder Funktionseinheiten 16 zur Ansteuerung dieser Achsen, zum Beispiel zur lagegeregelten, geschwindigkeitsgeregelten und/oder beschleunigungsgeregelten Achsansteuerung.

Zur Ausführung der Laufzeitumgebung 14 und der davon umfassten Software-Funktionseinheiten 16 umfasst die Maschine 10 zumindest eine Verarbeitungseinheit 18 in Form von oder nach Art eines Mikroprozessors.

Die Funktionalität der Laufzeitumgebung 14 liegt zum Auslieferungszeitpunkt der jeweiligen Maschine 10 fest. Grundsätzlich kann die Funktionalität der Laufzeitumgebung 14 durch ein Update oder Upgrade der Laufzeitumgebung 14 geändert oder erweitert werden. Bei der hier vorgeschlagenen Neuerung ist eine wesentlich erhöhte Flexibilität beim Ändern oder Ergänzen der Funktion der jeweiligen Maschine 10 gegeben.

In der sogenannten Cloud 20 ist in grundsätzlich an sich bekannter Art und Weise ein sogenannter AppStore 22 einer Cloud-Plattform erreichbar. Der AppStore 22 ist in grundsätzlich an sich bekannter Art und Weise ein Computerprogramm, das in einen Speicher 24 eines in der Cloud 20 erreichbaren Computers oder Computersystems, ggf. auch in einen verteilten Speicher 24 eines verteilten Computersystems, geladen ist. In diesem Speicher 24 oder allgemein in einem in Relation zu der Maschine 10 entfernten Speicher 24 steht zumindest eine sogenannte App 30, also ein Computerprogramm, zum Herunterladen (Download) bereit. Herunterladen meint dabei einen Datentransfer von der Cloud 20 und dem dortigen AppStore 22 (oder allgemein aus dem entfernten Speicher 24) in den Speicher 12 der Maschine 10.

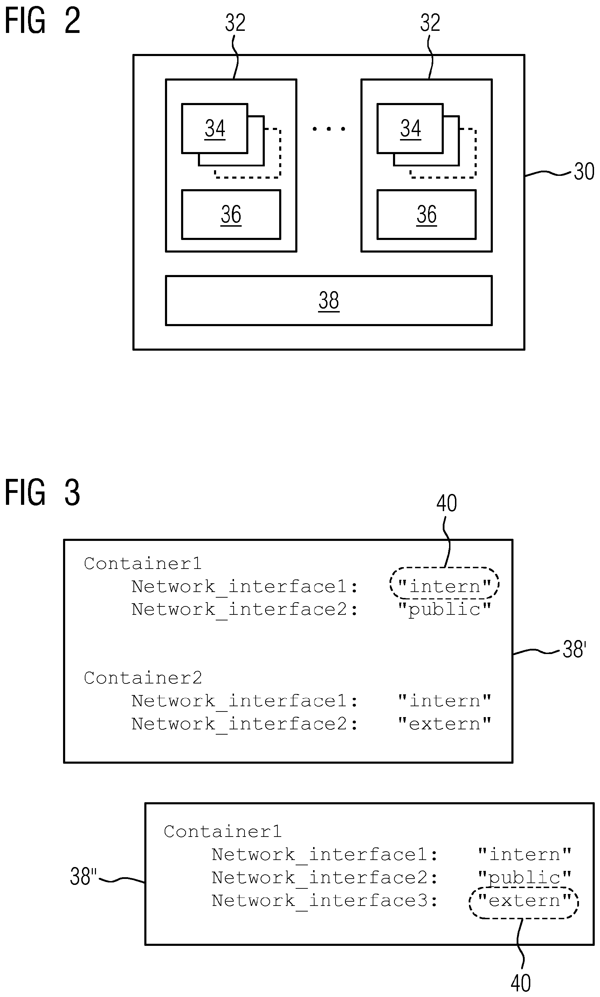

Die Darstellung in FIG 2 zeigt in schematisch vereinfachter Form eine einzelne App 30. Damit eine in dem AppStore 22 verfügbare App 30 auf grundsätzlich beliebigen Maschinen 10 ausgeführt werden kann, umfasst die App 30 zumindest einen sogenannten virtuellen Container 32 oder mehrere virtuelle Container 32. Ein solcher Container 32 ist das Basisobjekt der sogenannten Containervirtualisierung. Das Konzept der Containervirtualisierung sowie die Verwendung virtueller Container sind an sich bekannt. Weitere Erläuterungen zur Containervirtualisierung und zu virtuellen Containern sind daher hier nicht erforderlich und es wird auf die entsprechende Fachliteratur verwiesen.

Ein Container 32 umfasst in grundsätzlich an sich bekannter Art und Weise zumindest eine zu der App 30 gehörige Softwarefunktionalität 34 (FIG 2) und eine Laufzeitumgebung (Containerlaufzeitumgebung 36; FIG 2) für die oder jede von dem Container 32 umfasste Softwarefunktionalität 34. Die Softwarefunktionalität 34 oder die Gesamtheit der von der App 30 in einem Container 32 oder mehreren Containern 32 umfassten Softwarefunktionalitäten 34 bestimmt die Funktionalität der App 30. Zu der App 30 gehört eine Konfiguration (AppKonfiguration 38), welche Konfigurationsinformationen (Containerschnittstelle) für zumindest einen zu der App 30 gehörigen Container 32 umfasst. Eine Containerschnittstelle bildet die Namen von innerhalb des Containers 32 verwendeten Geräten, Ressourcen und dergleichen auf einen außerhalb des Containers 32 verwendbaren Namen für das jeweilige Gerät, die jeweilige Ressource usw. ab. Damit kann innerhalb des Containers 32 zum Beispiel zum Zugriff auf ein (virtuelles oder reales) Netzwerk ein Name für dieses Netzwerk verwendet werden, ohne dass bereits bekannt ist, wie das Netzwerk auf einem Hostsystem, also zum Beispiel einer Maschine 10, benannt ist. Die Containerschnittstelle gewährleistet in grundsätzlich an sich bekannter Art und Weise die Entkopplung des Containers 32 von den Geräten, Ressourcen und dergleichen eines zum Entwicklungszeitpunkt des Containers 32 einerseits unbekannten und andererseits grundsätzlich beliebigen Hostsystems. Die zu einer heruntergeladenen App 30 gehörige AppKonfiguration 38 ist die Gesamtheit aller Containerschnittstellen der von der App 30 umfassten Container 32.

Die AppKonfiguration 38 und deren Konfigurationsinformationen wird bzw. werden nach dem hier vorgeschlagenen Ansatz automatisch ausgewertet und ggf. modifiziert.

Die Darstellung in FIG 3 zeigt als Beispiel für eine AppKonfiguration 38 eine erste einfache AppKonfiguration 38' und eine zweite einfache AppKonfiguration 38". Jede AppKonfiguration 38 bezieht sich auf eine eigene App 30. Beim dargestellten Beispiel bezieht sich die erste AppKonfiguration 38' auf eine App 30 mit zumindest zwei Containern 32, nämlich die in der Konfiguration 38' exemplarisch als "Container1" und "Container2" bezeichneten Container 32. Die zweite AppKonfiguration 38" bezieht sich auf eine App 30 mit einem Container 32 oder mehreren Containern 32, nämlich zumindest mit dem in der Konfiguration 38" exemplarisch als "Container1" bezeichneten Container 32. Es ist darauf hinzuweisen, dass es sich bei den beiden mit "Container1" bezeichneten Containern 32 um Container 32 verschiedener Apps 30 handelt. Die Container 32 sind also trotz desselben Namens nicht identisch.

Die erste AppKonfiguration 38' besagt, dass der von der App 30, zu welcher die AppKonfiguration 38' gehört, umfasste Container 32 mit der Bezeichnung "Container1" eine Mehrzahl von Netzwerken und zum Zugriff auf diese durchnummerierte Netzwerkschnittstellen benutzt, die über einen symbolischen Bezeichner 40 (hier: "intern" und "public") innerhalb der App 30 eindeutig identifiziert sind. Der von derselben App 30 umfasste Container 32 mit der Bezeichnung "Container2" benutzt ebenfalls mehrere Netzwerke mit eindeutigen symbolischen Bezeichnern 40 (hier: "intern" und "extern"). Derselbe Bezeichner 40 (hier: "intern") für die beiden von der App 30 umfassten Container 32 bedeutet, dass die Container 32 über das Netzwerk (ein virtuelles Netzwerk oder ein reales Netzwerk), welchem der Bezeichner 40 "intern" zugeordnet ist, kommunikativ verbunden sind.

Die zweite AppKonfiguration 38" besagt, dass auch der von der App 30, zu welcher die AppKonfiguration 38" gehört, umfasste Container 32 mit der Bezeichnung "Container1" eine Mehrzahl von durch symbolische Bezeichner 40 identifizierten Netzwerken (hier: "intern", "public" und "extern") benutzt.

Die in der Darstellung verwendeten Bezeichner 40 ("intern", "extern" und "public") sind lediglich Beispiele und anstelle solcher Bezeichner 40 sind genauso andere Bezeichner 40 denkbar.

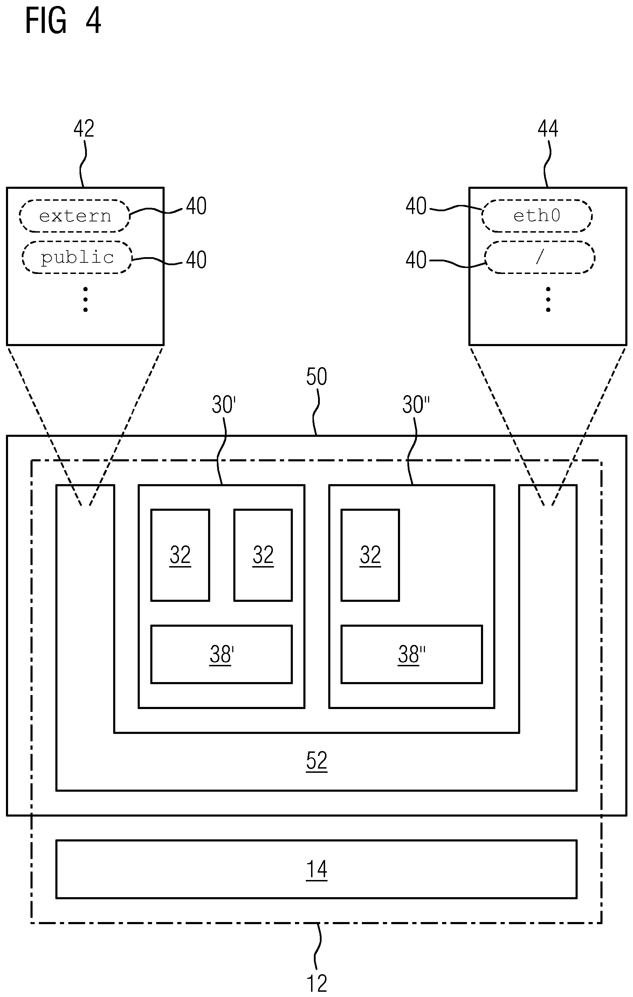

Wesentlich ist aber, dass zumindest einzelne im Rahmen einer AppKonfiguration 38, 38', 38" verwendbare Bezeichner 40 vorgegeben oder vorgebbar sind. Solche vorgegebenen oder vorgebbaren Bezeichner 40 sind die Basis für eine Positivliste (Whitelist) 42 (FIG 4) und eine Negativliste (Blacklist) 44 (FIG 4). Diese Listen 42, 44 oder ein entsprechender Datensatz werden beim Herunterladen einer App 30 (Deployment) auf eine Maschine 10 automatisch ausgewertet.

In der Darstellung in FIG 1 ist das Herunterladen einer App 30 auf eine Maschine 10 mittels eines von der Cloud 20 und dem AppStore 22 zur Maschine 10 weisenden Blockpfeils gezeigt. Der Blockpfeil kann auch als von dem entfernten Speicher 24 zum Speicher 12 der Maschine 10 weisend aufgefasst werden und das Herunterladen einer App 30 auf eine Maschine 10 ist auch das Herunterladen der App 30 aus einem entfernten Speicher 24 in den Speicher 12 der Maschine 10.

Die Darstellung in FIG 4 zeigt die Maschine 10 mit heruntergeladenen Apps 30', 30" mit weiteren Einzelheiten. Das Herunterladen einer App 30', 30" erfolgt in den Speicher 12 der Maschine 10 und bevorzugt in einen Speicher eines sogenannten Edge Device 50 (FIG 1, FIG 4). Die automatische Auswertung und eventuelle Modifikation der zugehörigen AppKonfiguration 38', 38" erfolgt mittels einer als Computerprogramm oder als Computerprogrammmodul (ggf. als verteiltes Computerprogramm, Computerprogrammmodul) implementierten App-Schnittstellen- und App-Verwaltungseinheit. Diese App-Schnittstellen- und App-Verwaltungseinheit wird hier und im Folgenden kurz als Veraltungseinheit 52 bezeichnet. Die Verwaltungseinheit 52 ist in den Speicher 12 der Maschine 10 und bevorzugt ebenfalls in den Speicher des Edge Device 50 geladen.

Das Edge Device 50 ist von der Maschine 10 umfasst oder mit der Maschine 10 zumindest kommunikativ verbunden. Insoweit gehört das Edge Device 50 zu der Maschine 10. Damit ist auch bei einer in den Speicher des Edge Device 50 geladenen Verwaltungseinheit 52 diese in den insgesamt zu der Maschine 10 gehörigen Speicher 12 geladen. In der schematisch extrem vereinfachten Darstellung in FIG 1 und FIG 4 ist das Edge Device 50 als Block innerhalb der selbst nur als Block gezeigten Maschine 10 dargestellt. Der Speicher 12 der Maschine 10 reicht in den Darstellungen in FIG 1 und FIG 4 bis in das Edge Device 50 hinein. Dies soll veranschaulichen, dass der Speicher des Edge Device 50 zum Adressraum der Maschine 10 und damit insgesamt zum Speicher 12 der Maschine 10 gehört. Das Edge Device 50 kann in grundsätzlich an sich bekannter Art und Weise eine eigene (nicht gezeigte) Verarbeitungseinheit in Form von oder nach Art eines Mikroprozessors aufweisen.

Das Herunterladen einer App 30', 30" erfolgt durch das Herunterladen der App 30', 30" zusammen mit dem oder jedem von der App 30', 30" umfassten Container 32 sowie der von der App 30', 30" umfassten AppKonfiguration 38', 38". Durch das Herunterladen einer App 30', 30" lässt sich der Funktionsumfang der Maschine 10 erweitern. Die Grundfunktionalität der Maschine 10 bleibt dabei unangetastet.

Die automatische Auswertung der AppKonfiguration 38', 38" beim Deployment erfolgt mittels der in Software implementierten Verwaltungseinheit 52. Die Verwaltungseinheit 52 stellt definierte Schnittstellen 54 für heruntergeladene Apps 30, 30', 30" zu Verfügung. Solche Schnittstellen 54 sind in der Darstellung in FIG 1 schematisch vereinfacht als "Kanäle" durch die Verwaltungseinheit 52 gezeigt. Der Zugriff auf die Laufzeitumgebung 14 der Maschine 10 und von der Maschine 10 umfasste oder zu der Maschine 10 gehörige Geräte und Ressourcen ist nur über die Verwaltungseinheit 52 und die dort definierten Schnittstellen 54 möglich. Insoweit fungiert die Verwaltungseinheit 52 als Schnittstelle zur Maschine 10 und als Sicherheitsschicht (Security Layer) zwischen einer heruntergeladenen App 30, 30', 30" und der Maschine 10. Nur die Verwaltungseinheit 52 startet eine heruntergeladene App 30, 30', 30" und den oder jeden davon umfassten Container 32. Soweit heruntergeladene Apps 30, 30', 30" jeweils zur Ausführung zumindest einer IoT-Funktion bestimmt sind, ermöglicht die Verwaltungseinheit 52 die Ergänzung der Funktionalität der Maschine 10 um IoT-Funktionen und die Verwaltungseinheit 52 fungiert als Plattform für maschinenspezifische IoT-Erweiterungen.

Eine Funktion der Verwaltungseinheit 52 besteht darin, dass diese ein direktes Starten einer heruntergeladenen App 30, 30', 30" und der davon umfassten Container 32 verhindert. Ein Starten der App 30', 30" und davon umfasster Container 32 erfolgt nur unter Kontrolle der Verwaltungseinheit 52 und erst nachdem diese die AppKonfiguration 38', 38" der App 30', 30" geprüft und - soweit notwendig - modifiziert hat. Eine weitere Funktion der Verwaltungseinheit 52 besteht entsprechend darin, dass diese automatisch eine AppKonfiguration 38', 38" einer heruntergeladenen App 30', 30" prüft und ggf. modifiziert. Eine nochmals weitere Funktion der Verwaltungseinheit 52 besteht darin, dass diese automatisch eine heruntergeladene App 30', 30" startet (durch das Starten des oder jedes davon jeweils umfassten Containers 32), sofern zuvor die automatische Prüfung und Modifikation der jeweiligen AppKonfiguration 38', 38" erfolgreich durchgeführt wurde.

Die automatische Prüfung und Modifikation einer AppKonfiguration 38', 38" einer heruntergeladenen App 30', 30" mittels der Verwaltungseinheit 52 basiert auf den beiden bereits erwähnten Listen 42, 44, also der Positiv- und der Negativliste 42, 44, und dort hinterlegten Bezeichnern 40. Die Positiv- und die Negativliste 42, 44 (die Negativliste 44 ist grundsätzlich optional) und die davon umfassten Bezeichner 40 ergibt bzw. ergeben sich aufgrund der von der Verwaltungseinheit 52 zur Verfügung gestellten definierten Schnittstellen 54 für heruntergeladene Apps 30, 30', 30", nämlich Schnittstellen 54 zur Maschine 10 und deren Laufzeitumgebung 14. Die Positivliste 42 oder die Positivliste 42 und die Negativliste 44 wird bzw. werden anhand der von der Verwaltungseinheit 52 zur Verfügung gestellten Schnittstellen 54 erstellt, entweder automatisch anhand der Verwaltungseinheit 52 oder durch einen menschlichen Benutzer, zum Beispiel durch diejenige Person, welche die Verwaltungseinheit 52 auf der jeweiligen Maschine 10 installiert und insoweit Kenntnis sowohl über den Funktionsumfang der Verwaltungseinheit 52 wie auch über den Funktionsumfang der Maschine 10 sowie deren Laufzeitumgebung 14 und dortige Geräte und Ressourcen hat. Die Verwaltungseinheit 52 umfasst oder hat zumindest Zugriff auf die Positiv- und die Negativliste 42, 44.

Die automatische Prüfung und Modifikation einer AppKonfiguration 38', 38" wird nun am Beispiel der in FIG 3 gezeigten Konfigurationen erläutert. Das gezeigte Beispiel geht davon aus, dass zwei Apps 30 heruntergeladen wurden. Diese werden zur Unterscheidung als erste App 30' und zweite App 30" bezeichnet. Beispielsweise wird zuerst die erste App 30' und später die zweite App 30" heruntergeladen. Auf die Reihenfolge des Herunterladens und den Zeitpunkt des Herunterladens kommt es aber nicht an. Die vorgenannte Reihenfolge beim Herunterladen der beiden Apps 30', 30" wird hier nur beispielhaft angenommen.

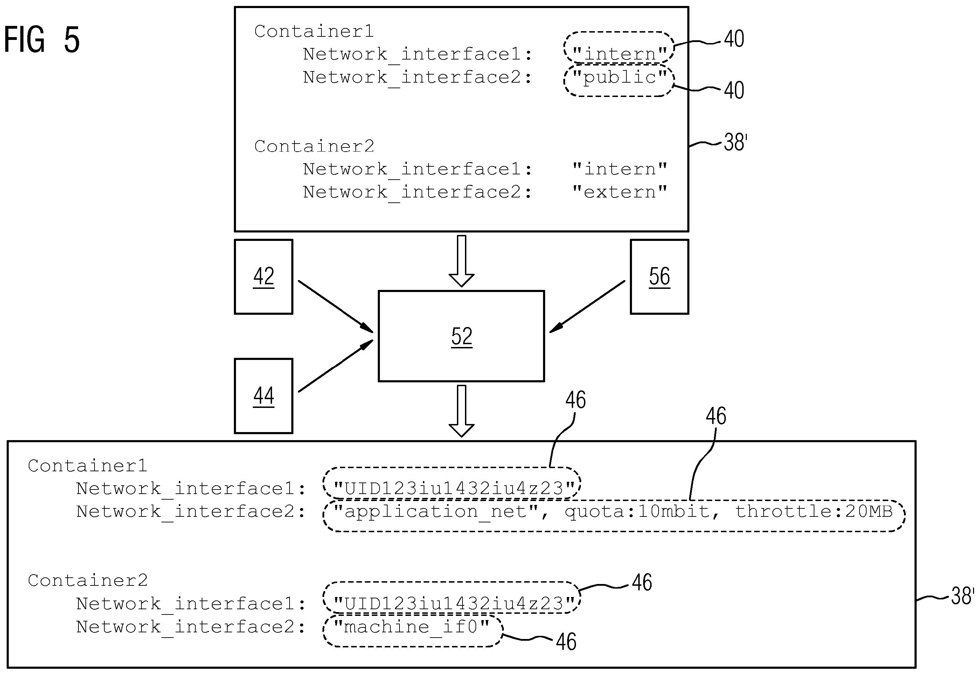

Mittels der Verwaltungseinheit 52 wird das Starten der Apps 30', 30" gesteuert und überwacht. Nach dem Herunterladen der ersten App 30' wird zunächst deren Start (der Start des oder jedes davon umfassten Containers 32) verhindert. Sodann wird mittels der Verwaltungseinheit 52 die AppKonfiguration 38' der ersten App 30' ausgewertet. Dabei werden die Inhalte der Positiv- und der Negativliste 42, 44 berücksichtigt und es werden in der AppKonfiguration 38' verwendete Bezeichner 40 mit den Bezeichnern 40 in der Positiv- und der Negativliste 42, 44 verglichen. Die AppKonfiguration 38' der ersten App 30' umfasst unter anderem den Bezeichner 40 "public". Dieser Bezeichner 40 findet sich in der Positivliste 42. Auf Basis der Positivliste 42 kann demnach bereits automatisch festgestellt werden, dass es sich um einen zulässigen Bezeichner 40 handelt. Ein zulässiger Bezeichner 40 wird zum Beispiel mittels einer Umsetzungstabelle (Lookup-Tabelle; LUT) 56 in einen Zielausdruck 46 (FIG 5) umgesetzt. Wenn sich ein in der AppKonfiguration 38' verwendeter Bezeichner 40 in der Negativliste 44 findet, ist auf deren Basis automatisch (mittels der Verwaltungseinheit 52) feststellbar, dass es sich um einen unzulässigen Bezeichner 40 (zum Beispiel "eth0" oder "/" zur Verhinderung eines direkten Zugriffs auf das Netzwerkinterface bzw. zur Verhinderung eines direkten Zugriffs auf das sogenannte root-Verzeichnis) handelt. Grundsätzlich kann auch ein unzulässiger Bezeichner 40 mittels einer Umsetzungstabelle, insbesondere derselben Umsetzungstabelle 56, umgesetzt werden, also zum Beispiel in einen zulässigen Bezeichner. Die oder jede Umsetzungstabelle 56 ist ebenfalls in den Speicher 12 der Maschine 10 und bevorzugt dort in den Speicher des Edge Device 50 geladen. Die oder jede Umsetzungstabelle 56 umfasst jeweils paarweise zusammengehörige Einträge, also jeweils einerseits einen Bezeichner 40 und andererseits einen zu dem Bezeichner 40 gehörigen Zielausdruck 46. Der Inhalt der Umsetzungstabelle 56 kann auch von der Positiv- und der Negativliste 42, 44 selbst umfasst sein. Dann umfassen diese Listen 42, 44 nicht nur die jeweils zugelassenen bzw. nicht zugelassenen Bezeichner 40, sondern zu jedem Bezeichner 40 auch den jeweils zugeordneten Zielausdruck 46.

Im dargestellten Beispiel wird der automatisch durch die Verwaltungseinheit 52 mittels der Positivliste 42 als zulässig ermittelte Bezeichner 40 "public" durch den (entweder aufgrund der Umsetzungstabelle 56 oder aufgrund der Positivliste 42 resultierenden) Zielausdruck 46 "application_net", quota:10mbit, throttle:20MB" ersetzt, wie dies in der Darstellung in FIG 5 gezeigt ist. Ein Zielausdruck 46 ist grundsätzlich frei wählbar und die jeweils gewählte Formulierung wird in die jeweilige Liste 42, 44 bzw. die Umsetzungstabelle 56 eingetragen. Wesentlich ist, dass der Zielausdruck 46 ein beim Betrieb der Maschine 10 gültiger Ausdruck ist. Vorliegend bezeichnet der Zielausdruck 46 den Namen eines von der Maschine 10 verwendeten Netzwerks (application _net). Des Weiteren umfasst der Zielausdruck 46 eine Spezifikation (quota:10mbit), welche die Benutzung dieses Netzwerks im Umfang einer bestimmten Datenrate erlaubt und die Spezifikation gibt vor, dass ab einem bestimmten Datenvolumen (throttle:20MB) eine Reduktion der Datenrate eintritt. Einem Zielausdruck 46 können beliebige Spezifikationen hinzugefügt werden, wie sie bei einer Parametrierung eines Netzwerks oder eines Netzwerkszugangs zugelassen sind.

Die AppKonfiguration 38' umfasst noch einen weiteren Bezeichner 40, der in der Positivliste 42 enthalten ist ("extern"). Auch dieser wird in grundsätzlich derselben Art, wie dies oben beschrieben wurde, automatisch durch die Verwaltungseinheit 52 ersetzt. Auch das Ergebnis dieser Ersetzung ist in der Darstellung in FIG 5 gezeigt ("extern" wird zu "machine_if0").

Die AppKonfiguration 38' umfasst aber üblicherweise auch Bezeichner 40, die weder in der Positivliste 42 noch in der Negativliste 44 enthalten sind. Bei dem in den Figuren (FIG 3, FIG 5) gezeigten einfachen Beispiel handelt es sich um den Bezeichner 40 "intern". Dieser Bezeichner 40 bezieht sich auf den Namen eines von der ersten App 30' verwendeten virtuellen Netzwerks (internes virtuelles Netzwerk). Ein Bezeichner 40, der sich bei der automatischen Prüfung einer AppKonfiguration 38 weder in der Positivliste 42 noch in der Negativliste 44 findet, wird von der Verwaltungseinheit 52 automatisch durch einen Zielausdruck 46 in Form einer systemweit eindeutigen Kennung ersetzt. Im gezeigten Beispiel lautet der Zielausdruck 46: "UID123iu1432iu4z23".

Die systemweit eindeutige Kennung wird von der Verwaltungseinheit 52 automatisch ausgewählt oder erzeugt. Die Kennung ist systemweit eindeutig, wenn diese bei einer Verwendung beim Betrieb der Maschine 10 zu keinen Konflikten führt. Das System, auf welches sich "systemweit eindeutig" bezieht, ist also die gesamte Maschine 10 mit allen davon umfassten Funktionseinheiten.

Eine Möglichkeit zur Auswahl einer systemweit eindeutigen Kennung besteht zum Beispiel darin, dass sukzessive von einer vorgegebenen Liste mit eindeutigen Kennungen jeweils eine Kennung übernommen und die übernommene Kennung dann in der Liste gelöscht wird. Eine Möglichkeit zur Erzeugung einer systemweit eindeutigen Kennung besteht zum Beispiel darin, dass eine Kennung nach Art eines sogenannten Universally Unique Identifier (UUID) generiert wird. Eine solche oder ähnlich Auswahl bzw. Erzeugung erfolgt automatisch durch die Verwaltungseinheit 52.

Die systemweit eindeutige Kennung führt dazu, dass bei einem (späteren/anschließenden) Start der App 30' und einem Start der davon umfassten Container 32 durch die Verwaltungseinheit 52 für die App 30' das von dieser erwartete interne virtuelle Netzwerk zur Verfügung steht und benutzt werden kann. Die systemweit eindeutige Kennung führt aber auch dazu, dass andere Apps 30, 30", welche die ausgewählte/generierte eindeutige Kennung nicht kennen, keinen Zugriff auf dieses virtuelle Netzwerk der App 30' haben.

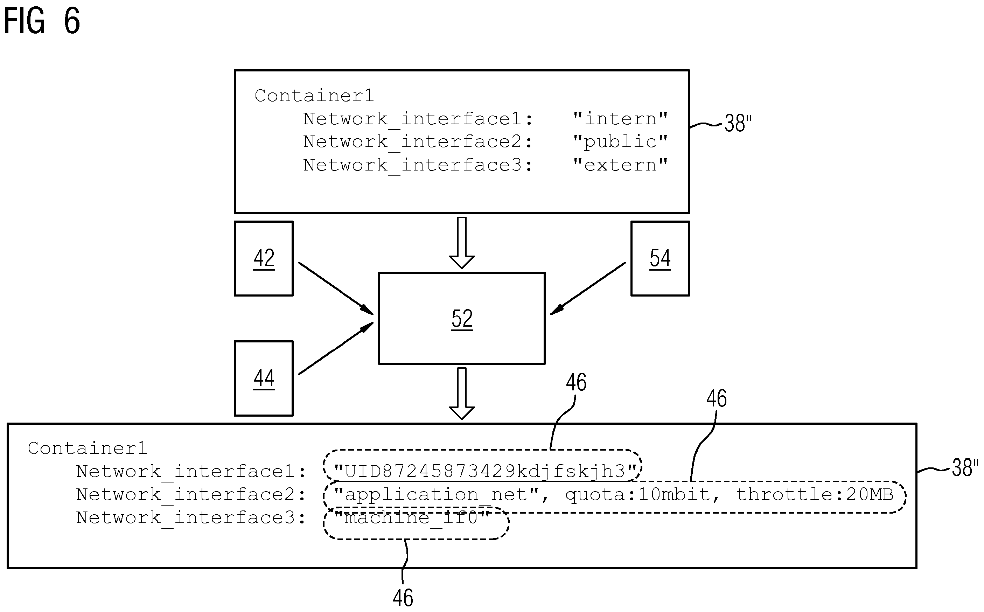

Dies wird noch deutlicher, wenn in dem in den Figuren (FIG 3, FIG 6) gezeigten Beispiel auch die AppKonfiguration 38" der zweiten App 30" betrachtet wird. Auch für diese App 30" wird deren AppKonfiguration 38" in der oben beschriebenen Art und Weise automatisch durch die Verwaltungseinheit 52 geprüft und modifiziert. Dabei werden die Bezeichner 40 "public" und "extern" durch dieselben Zielausdrücke 46 ersetzt, wie dies bei der AppKonfiguration 38' der ersten App 30' erfolgt ist. Dies führt dazu, dass beide Apps 30', 30", dort wo dies vorgesehen ist, auf dieselben Netzwerke zugreifen ("application_net", "machine_if0").

Die AppKonfiguration 38" der zweiten App 30" umfasst ebenfalls einen Bezeichner 40, welcher weder in der Positiv- noch in der Negativliste 42, 44 enthalten ist. Dass es sich bei diesem Bezeichner 40 um denselben Bezeichner 40 handelt, welcher auch in der AppKonfiguration 38' der ersten App 30' enthalten ist, ist lediglich der Einfachheit des hier gewählten Beispiels geschuldet; grundsätzlich sind beliebige Bezeichner 40 verwendbar. Auch hier wird der oder jeder weder in der Positiv- noch in der Negativliste 42, 44 enthaltene Bezeichner 40 automatisch von der Verwaltungseinheit 52 durch einen Zielausdruck 46 in Form einer systemweit eindeutigen Kennung ersetzt. Im gezeigten Beispiel lautet der Zielausdruck 46: "UID87245873449kdjfskjh3".

Die hier als Zielausdruck 46 resultierende Kennung ist erkennbar unterschiedlich von der bei der Modifikation der AppKonfiguration 38' der ersten App 30' resultierenden eindeutigen Kennung. Die eindeutige Kennung hat erneut das Ergebnis, dass die zweite App 30" beim Start ein erwartetes virtuelles Netzwerk vorfindet. Die eindeutige Kennung hat aber auch das Ergebnis, dass keine kommunikative Verbindung zwischen der zweiten App 30" und der ersten App 30' besteht (denn keine der beiden Apps 30', 30" hat Informationen über das von der jeweils anderen App 30', 30" verwendete interne virtuelle Netzwerk). Die beiden Apps 30', 30" können sich also nicht gegenseitig beeinflussen und sind bei ihrer Ausführung vollkommen unabhängig voneinander.

Im Ergebnis wird damit im Wege der automatischen Anpassung jeder AppKonfiguration 38, 38', 38" vor dem Start der jeweiligen App 30, 30', 30" mittels der Verwaltungseinheit 52 ein eigener Namensraum (Namespace) für jede aus einem AppStore 22 oder allgemein aus einem entfernten Speicher 24 heruntergeladene App 30, 30', 30" geschaffen. Der eigene Namensraum vermeidet Konflikte zwischen gleichzeitig ausgeführten Apps 30, 30', 30" und gewährleistet, dass sich heruntergeladene Apps 30, 30', 30" nicht gegenseitig beeinflussen können. Indem sichergestellt ist, dass sich heruntergeladene Apps 30, 30', 30" nicht gegenseitig beeinflussen können, ist ein sicherer Betrieb zumindest der Maschine 10 selbst gewährleistet. Soweit die Verwaltungseinheit 52 eine definierte Schnittstelle zur Maschine 10 darstellt und heruntergeladene Apps 30 folglich nur von der Verwaltungseinheit 52 zur Verfügung gestellte Schnittstellen 54 für einen Zugriff auf die Maschine 10 nutzen können, ist die Maschine 10 entsprechend der Schnittstellendefinition gegen heruntergeladene Apps 30 abgesichert. Einzelne im Vordergrund stehende Aspekte der hier eingereichten Beschreibung lassen sich damit kurz wie folgt zusammenfassen: Vorgeschlagen werden gemäß jeweils der Ansprüche 1, 5, 7 und 8 ein Verfahren zum Betrieb einer Produktions- oder Werkzeugmaschine 10, eine nach dem Verfahren arbeitende Maschine 10, eine Verwendung des Verfahrens und ein Computerprogramm mit einer Implementation des Verfahrens, wobei das Verfahren die folgenden Schritte umfasst: Herunterladen einer App 30 zusammen mit einer AppKonfiguration 38 aus einem entfernten Speicher 24 in einen Speicher 12 der Maschine 10, Verhindern eines unmittelbaren Starts der heruntergeladenen App 30, Modifizieren der AppKonfiguration 38 der heruntergeladenen App 30, wobei beim Modifizieren von der AppKonfiguration 38 umfasste Bezeichner 40 fallweise durch einen automatisch ausgewählten oder automatisch generierten Zielausdruck 46 ersetzt werden, und Starten der heruntergeladenen App 30 nach dem Modifizieren der AppKonfiguration 38.

## Patentansprüche

1. Verfahren zum Betrieb einer Produktions- oder Werkzeugmaschine (10) mit folgenden Schritten:
Herunterladen einer zumindest einen virtuellen Container (32) umfassenden App (30) zusammen mit einer AppKonfiguration (38) aus einem entfernten Speicher (24) in einen Speicher (12) der Produktions- oder Werkzeugmaschine (10);
Verhindern eines unmittelbaren Starts der heruntergeladenen App (30) auf der Produktions- oder Werkzeugmaschine (10);
**gekennzeichnet durch**
automatisches Modifizieren der AppKonfiguration (38) der heruntergeladenen App (30),
wobei von der AppKonfiguration (38) umfasste Bezeichner (40) ausgewertet und mit von einer Positivliste (42) und einer Negativliste (44) umfassten Bezeichnern (40) verglichen werden, wobei die von der Appkonfiguration (38) umfassten Bezeichner (40) in von der AppKonfiguration (38) umfassten Zuweisungen enthalten sind, wobei eine Zuweisung einen linken und einen rechten Teil hat, wobei der rechte Teil Bezeichner (40) genannt wird, wobei mittels der Zuweisung ein innerhalb der heruntergeladenen App (30) verwendeter Name auf einen anderen Namen abgebildet wird, wobei die Zuweisungen eine Verwendung von Namen für zumindest ein Gerät, eine Ressource, ein Netzwerk innerhalb der App (30) oder des zumindest einen virtuellen Containers (32) ermöglichen, wobei die Namen für zumindest ein Gerät, eine Ressource, ein Netzwerk auf der Produktions- oder Werkzeugmaschine (10) noch unbekannt sind, und
wobei ein weder in der Positivliste (42) noch in der Negativliste (44) enthaltener Bezeichner (40) durch einen automatisch ausgewählten oder automatisch generierten eindeutigen und einzigartigen Zielausdruck (46) ersetzt wird;
ein automatisches Starten der heruntergeladenen App (30) nach dem Modifizieren der AppKonfiguration (38).

2. Verfahren nach Anspruch 1,
wobei beim Modifizieren der AppKonfiguration (38) ein entweder in der Positivliste (42) oder in der Negativliste (44) enthaltener Bezeichner (40) durch einen dem Bezeichner (40) zugeordneten Zielausdruck (46) ersetzt wird,
wobei die Zuordnung entweder in der Positiv- bzw. der Negativliste (42, 44) oder in einer Umsetzungstabelle (56) kodiert ist.

3. Verfahren nach Anspruch 1 oder 2,
wobei das Verhindern des unmittelbaren Starts einer App (30), das Modifizieren der AppKonfiguration (38) und das anschließende Starten der App (30) mittels einer in den Speicher (12) der Produktions- oder Werkzeugmaschine (10) geladenen Verwaltungseinheit (52) erfolgt.

4. Verfahren nach Anspruch 3,
wobei die Verwaltungseinheit (52) als Schnittstelle zwischen der heruntergeladenen App (30) und der Produktions- oder Werkzeugmaschine (10) fungiert, indem die Verwaltungseinheit (52) definierte Schnittstellen (54) für die heruntergeladene App (30) zur Verfügung stellt.

5. Produktions- oder Werkzeugmaschine (10),
wobei die Produktions- oder Werkzeugmaschine (10) einen Speicher (12) für von einem entfernten Speicher (24) herunterladbare Apps (30) und eine in den Speicher (12) geladene, in Software implementierte Verwaltungseinheit (52) umfasst,
wobei die Verwaltungseinheit (52) eingerichtet ist, automatisch einen unmittelbaren Start einer heruntergeladenen App (30) auf der Produktions- oder Werkzeugmaschine (10) zu verhindern,
**dadurch gekennzeichnet, dass**
die Verwaltungseinheit (52) eingerichtet ist, eine AppKonfiguration (38) einer heruntergeladenen App (30) automatisch zu modifizieren, indem von der AppKonfiguration (38) umfasste Bezeichner (40) ausgewertet und mit von einer Positivliste (42) und einer Negativliste (44) umfassten Bezeichnern (40) verglichen werden, wobei die von der Appkonfiguration (38) umfassten Bezeichner (40) in von der AppKonfiguration (38) umfassten Zuweisungen enthalten sind, wobei eine Zuweisung einen linken und einen rechten Teil hat, wobei der rechte Teil Bezeichner (40) genannt wird, wobei mittels der Zuweisung ein innerhalb der heruntergeladenen App (30) verwendeter Name auf einen anderen Namen abgebildet wird, wobei die Zuweisungen eine Verwendung von Namen für zumindest ein Gerät, eine Ressource, ein Netzwerk innerhalb der App (30) oder des zumindest einen virtuellen Containers (32) ermöglichen, wobei die Namen für zumindest ein Gerät, eine Ressource, ein Netzwerk auf der Produktions- oder Werkzeugmaschine (10) noch unbekannt sind, und ein weder in der Positivliste (42) noch in der Negativliste (44) enthaltener Bezeichner (40) durch einen automatisch ausgewählten oder automatisch generierten eindeutigen und einzigartigen Zielausdruck (46) ersetzt wird, und
wobei die Verwaltungseinheit (52) eingerichtet ist, eine heruntergeladene App (30) nach dem Modifizieren der AppKonfiguration (38) automatisch zu starten.

6. Produktions- oder Werkzeugmaschine (10) nach Anspruch 5,
wobei die Verwaltungseinheit (52) eingerichtet ist, als Schnittstelle zwischen der heruntergeladenen App (30) und der Produktions- oder Werkzeugmaschine (10) zu fungieren, indem die Verwaltungseinheit (52) definierte Schnittstellen (54) für die heruntergeladene App (30) zur Verfügung stellt.

7. Verwendung eines Verfahrens nach einem der vorangehenden Verfahrensansprüche 1-4 zur Installation von IoT-Erweiterungen auf einer Produktions- oder Werkzeugmaschine (10).

8. Computerprogramm (52) mit Programmcodemitteln, die bei der Ausführung des Computerprogramms durch eine Produktions- oder Werkzeugmaschine (10) diese veranlassen, die Schritte des Verfahrens nach einem der vorangehenden Verfahrensansprüche 1-4 auszuführen.

9. Computerlesbares Speichermedium mit elektronisch auslesbaren Steuersignalen, die bei der Ausführung durch eine Produktions- oder Werkzeugmaschine (10) diese veranlassen, die Schritte des Verfahrens nach einem der vorangehenden Verfahrensansprüche 1-4 auszuführen.

## Claims

1. Method for operating a production machine or machine tool (10), comprising the following steps:
downloading an app (30) comprising at least one virtual container (32) together with an app configuration (38) from a remote memory store (24) into a memory store (12) of the production machine or machine tool (10);
preventing an immediate starting of the downloaded app (30) on the production machine or machine tool (10);
**characterised by**
automatically modifying the app configuration (38) of the downloaded app (30),
wherein identifiers (40) included by the app configuration (38) are evaluated and compared with identifiers (40) included by a positive list (42) and a negative list (44), wherein identifiers (40) included by the app configuration (38) are contained in assignments included by the app configuration (38), wherein an assignment has a left-hand part and a right-hand part, wherein the right-hand part is named the identifier (40), wherein a name used within the downloaded app (30) is mapped to another name by means of the assignment, wherein the assignments permit a use of names for at least one device, resource, network within the app (30) or the at least one virtual container (32), wherein the names of at least one device, resource, network on the production machine or machine tool (10) are not yet known, and
wherein an identifier (40) contained neither in the positive list (42) nor in the negative list (44) is replaced with an automatically selected or automatically generated, unambiguous and unique target expression (46);
automatically starting the downloaded app (30) after the modification of the app configuration (38).

2. Method according to claim 1,
wherein on modification of the app configuration (38) an identifier (40) contained either in the positive list (42) or in the negative list (44) is replaced with a target expression (46) allocated to the identifier (40),
wherein the allocation is encoded either in the positive or the negative list (42, 44) or in a conversion table (56).

3. Method according to claim 1 or 2,
wherein the prevention of the immediate start of an app (30), the modification of the app configuration (38) and the subsequent starting of the app (30) are carried out by means of an administration unit (52) loaded into the memory store (12) of the production machine or machine tool (10).

4. Method according to claim 3,
wherein the administration unit (52) functions as an interface between the downloaded app (30) and the production machine or machine tool (10) in that the administration unit (52) makes available defined interfaces (54) for the downloaded app (30).

5. Production machine or machine tool (10),
wherein the production machine or machine tool (10) comprises a memory store (12) for apps (30) downloaded from a remote memory store (24) and an administration unit (52) implemented in software loaded into the memory store (12),
wherein the administration unit (52) is configured to automatically prevent an immediate starting of a downloaded app (30) on the production machine or machine tool (10),
**characterised in that**
the administration unit (52) is configured to automatically modify an app configuration (38) of a downloaded app (30) **in that** identifiers (40) included by the app configuration (38) are evaluated and compared with identifiers (40) included by a positive list (42) and a negative list (44), wherein the identifiers (40) included by the app configuration (38) are contained in assignments included by the app configuration (38), wherein an assignment has a left-hand part and a right-hand part, wherein the right-hand part is named the identifier (40), wherein a name used within the downloaded app (30) is mapped to another name by means of the assignment, wherein the assignments permit a use of names for at least one device, resource, network within the app (30) or the at least one virtual container (32), wherein the names for at least one device, resource, network on the production machine or machine tool (10) are not yet known, and an identifier (40) not contained in the positive list (42) or an identifier (40) contained neither in the positive list (42) nor in the negative list (44) is replaced with an automatically selected or automatically generated unambiguous and unique target expression (46), and
wherein the administration unit (52) is configured to automatically start a downloaded app (30) after the modification of the app configuration (38).

6. Production machine or machine tool (10) according to claim 5,
wherein the administration unit (52) is configured to function as an interface between the downloaded app (30) and the production machine or machine tool (10) in that the administration unit (52) makes available defined interfaces (54) for the downloaded app (30).

7. Use of a method according to one of the preceding method claims 1-4 for the installation of IoT extensions on a production machine or machine tool (10).

8. Computer program (52) having program code means which, on the execution of the computer program by means of a production machine or machine tool (10), cause it to carry out the steps of the method according to one of the preceding method claims 1-4.

9. Computer-readable storage medium with electronically readable control signals which, on execution by a production machine or machine tool (10), cause it to carry out the steps of the method according to one of the preceding method claims 1-4.

## Revendications

1. Procédé pour faire fonctionner une machine de production ou une machine-outil (10) comprenant les stades suivants :
on charge une application (30) comprenant au moins un container (32) virtuel ensemble avec une configuration (38) d'application d'une mémoire (24) à distance dans une mémoire (12) de la machine de production ou la machine-outil (10) ;
on empêche un démarrage immédiat de l'application (30) chargée sur la machine de production ou la machine-outil (10) ;
**caractérisé par**
modification automatique de la configuration (38) de l'application (30) chargée,
dans lequel on évalue des désignateurs (40) embrassés par la configuration (38) d'application et on les compare à des désignateurs (40) embrassés par une liste (42) positive et par une liste (44) négative, dans lequel les désignateurs (40) embrassés par la configuration (38) d'application sont contenus dans des affectations embrassées par la configuration (38) d'application, dans lequel une affectation a une partie gauche et une partie droite, dans lequel on désigne la partie droite désignateur (40), dans lequel au moyen de l'affectation, on reproduit une dénomination utilisée dans l'application (30) chargée sur une autre dénomination, dans lequel les affectations permettent une utilisation de dénominations pour au moins un appareil, une ressource, un réseau dans l'application (30) ou du au moins un container (32) virtuel, dans lequel les dénominations d'au moins un appareil, une ressource, un réseau sont encore inconnues sur la machine de production ou la machine-outil (10),
et
dans lequel on remplace un désignateur (40) contenu ni dans la liste (42) positive, ni dans la liste (44) négative par une expression (46) cible univoque et unique en son genre sélectionnée automatiquement ou créée automatiquement ;
un démarrage automatique de l'application (30) chargée après la modification de la configuration (38) d'application.

2. Procédé suivant la revendication 1,
dans lequel lors de la modification de la configuration (38) d'application, on remplace un désignateur (40) contenu ni dans la liste (42) positive, ni dans la liste (44) négative par une expression (46) cible associée au désignateur (40),
dans lequel l'association est codée ni dans la liste positive et respectivement négative (42, 44), ni dans une table (56) de conversion.

3. Procédé suivant la revendication 1 ou 2,
dans lequel l'empêchement du démarrage immédiat d'une application (30), la modification de la configuration (38) d'application et le démarrage ensuite de l'application (30) s'effectue au moyen d'une unité (52) de gestion chargée dans la mémoire (12) de la machine de production ou dans la machine-outil (10).

4. Procédé suivant la revendication 3,
dans lequel l'unité (52) de gestion sert d'interface entre l'application (30) chargée et la machine de production ou la machine-outil (10), par le fait que l'unité (52) de gestion met à disposition des interfaces (54) définies pour l'application (30) chargée.

5. Machine de production ou machine-outil (10),
dans laquelle la machine de production ou la machine-outil (10) comprend une mémoire (12) pour une application (30) pouvant être chargée à partir d'une mémoire (24) à distance et une unité (52) de gestion chargée dans la mémoire (12) et mise en œuvre par logiciel,
dans laquelle l'unité (52) de gestion est agencée pour empêcher automatiquement un démarrage immédiat d'une application (30) chargée sur la machine de production ou la machine-outil (10),
**caractérisée en ce que** l'unité (52) de gestion est agencée pour modifier automatiquement une configuration (38) d'une application (30) chargée, par le fait qu'on évalue des désignateurs (40) embrassés par la configuration (38) d'application et on les compare à des désignateurs (40) embrassés par une liste (42) positive et par une liste (44) négative, dans lequel les désignateurs (40) embrassés par la configuration (38) d'application sont contenus dans des affectations embrassées par la configuration (38) d'application, dans laquelle une affectation a une partie gauche et une partie droite, dans laquelle on désigne la partie droite désignateur (40), dans laquelle au moyen de l'affectation, on reproduit une dénomination utilisée dans l'application (30) chargée sur une autre dénomination, dans laquelle les affectations permettent une utilisation de dénominations pour au moins un appareil, une ressource, un réseau dans l'application (30) ou du au moins un container (32) virtuel, dans laquelle les dénominations d'au moins un appareil, une ressource, un réseau sont encore inconnues sur la machine de production ou la machine-outil (10), et
dans laquelle on remplace un désignateur (40) contenu ni dans la liste (42) positive, ni dans la liste (44) négative par une expression (46) cible univoque et unique en son genre sélectionnée automatiquement ou créée automatiquement,
et dans laquelle l'unité (52) de gestion est agencée pour démarrer automatiquement une application (30) chargée après la modification de la configuration (38) d'application.

6. Machine de production ou machine-outil (10) suivant la revendication 5,
dans laquelle l'unité (52) de gestion est agencée pour servir d'interface entre l'application (30) chargée et la machine de production ou la machine-outil (10), par le fait que l'unité (52) de gestion met à disposition des interfaces (54) définies pour l'application (30) chargée.

7. Utilisation d'un procédé suivant l'une des revendications 1 à 4 précédentes pour l'installation d'extensions IoT sur une machine de production ou une machine-outil (10).

8. Programme (52) d'ordinateur, comprenant des moyens de code de programme qui, lors de l'exécution du programme d'ordinateur par une machine de production ou une machine-outil (10), font que celle-ci exécute les stades du procédé suivant l'une des revendications 1 à 4 précédentes de procédé.

9. Support de mémoire déchiffrable par ordinateur, comprenant des signaux de commande déchiffrables électroniquement qui, lors de l'exécution par une machine de production ou une machine-outil (10), font que celle-ci exécute les stades du procédé suivant l'une des revendications 1 à 4 précédentes de procédé.
